(19) Europäisches Patentamt
European Patent Office
Office européen des brevets

(11) EP 0 487 451 B1

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int. Cl.$^6$: **A01N 43/653**
// (A01N43/653, 43:36, 25:12, 25:04)

(21) Anmeldenummer: **91810865.5**

(22) Anmeldetag: **07.11.1991**

(54) **Mikrobizide Mittel**
Microbicidal agents
Agents microbicides

(84) Benannte Vertragsstaaten:
**AT BE CH DE DK ES FR GB GR IT LI LU NL SE**

(30) Priorität: **16.11.1990 CH 3637/90**

(43) Veröffentlichungstag der Anmeldung:
**27.05.1992 Patentblatt 1992/22**

(73) Patentinhaber: **CIBA-GEIGY AG**
**CH-4002 Basel (CH)**

(72) Erfinder:
- **Steck, Bernhard**
  **CH-3286 Muntelier (CH)**
- **Nyfeler, Robert, Dr.**
  **CH-4057 Basel (CH)**

(56) Entgegenhaltungen:
**EP-A- 0 040 345**
**EP-A- 0 206 999**
**EP-A- 0 316 970**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 487 451 B1

Printed by Rank Xerox (UK) Business Services
2.10.4/3.4

## Beschreibung

Die vorliegende Erfindung betrifft mikrobizide Gemische mit synergistisch gesteigerter Wirkung gegen Pflanzenkrankheiten und gegen Mikroorganismen-Befall an pflanzlichem Vermehrungsgut oder an sonstigem pflanzlichen oder tierischen Material sowie Verfahren zur Anwendung solcher Gemische, insbesondere zur Saatbeizung.

Die Erfindung bezieht sich insbesondere auf die Bekämpfung bzw. Verhütung von Krankheiten an Getreide-Saatgut.

Es wurde gefunden, dass eine Kombination der Wirkstoff-Komponente I), 4-(2,2-Difluoro-1,3-benzodioxol-7-yl)-1H-pyrrol-3-carbonitril, der Formel I

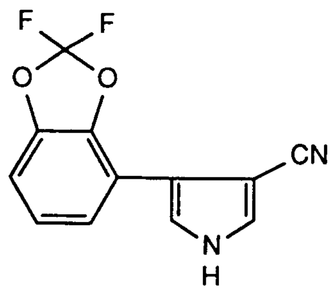

(I)

mit der Wirkstoff-Komponente II), α-[2-(4-Chlorophenyl)ethyl]-α-(1,1-dimethylethyl)-β-(1H-1,2,4-triazolyl)-1-ethanol der Formel II

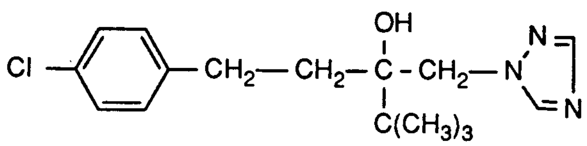

(II)

oder mit einem ihrer Salze zu einer synergistisch gesteigerten Aktivität bei der Bekämpfung und Verhütung von Pflanzenkrankheiten führt.

Die Verbindung der Formel I wird in der EP-A-206,999 als fungizide Aktivsubstanz beschrieben. Sie zeichnet sich vor allem als Kontaktfungizid aus.

Die Verbindung der Formel II ist als fungizide Aktivsubstanz in der EP-A-40 345 beschrieben.

Die erwähnten Salze der Verbindung der Formel II können durch Umsetzung der Base mit Säuren hergestellt werden.

Unter den Säuren, die zur Herstellung von Salzen der Formel II verwendet werden können, sind zu nennen: Halogenwasserstoffsäure wie Fluorwasserstoffsäure, Chlorwassserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der basischen Komponente II ein. Diese Komplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

Es ist dem Fachmann bekannt, dass die Gesamtwirkung einer fungiziden Aktivsubstanz durch den Zusatz eines anderen Fungizids mit unterschiedlichem Wirkungsspektrum verbreitert werden kann.

Ueberraschend wurde aber gefunden, dass die Kombination der Wirkstoffe I und II zu einer ganz unerwartet hohen Wirkungssteigerung gegen saatbürtige und bodenbürtige Pilze führt. Die durch die erfindungsgemässe Kombination erzielte Wirkungssteigerung ist entschieden grösser als die durch Addition der Wirkungen der beiden einzelnen Komponenten zu erwartende Aktivität, das heisst die Aktivität ist synergistisch gesteigert.

Die vorliegende Erfindung ermöglicht z.B. eine Samenbeizung mit deutlich geringeren Mengen an Bioziden als bisher üblich und stellt damit eine ganz wesentliche Bereicherung der Technik dar.

Die Erfindung bezieht sich nicht allein auf die Anwendung von Gemischen der Komponenten I und II auf das Saatgut sondern auch auf die Applikation der Einzelkomponenten in unmittelbarer Folge.

Günstige Mischungsverhältnisse der beiden Wirkstoffe sind I:II = 10:1 bis 1:20, besonders I:II = 10:1 bis 1:12 und ganz besonders I:II = 4:1 bis 1:2. Andere vorteilhafte Mischungsverhältnisse sind I:II = 5:2 bis 2:5 oder 5:3, 3:2, 1:1.

Die Kombination der Aktivkomponenten I und II gemäss der Erfindung erzielt nützliche Kontaktwirkung sowie systemische und Dauerwirkung bei der Bekämpfung der saat- und bodenbürtigen Pflanzenkrankheiten. Durch die erfindungsgemässen Kombinationen werden die Mikroorganismen am Vorratsgut und am Vermehrungsgut, insbesondere am Saatgut, zerstört und die sich in Entwicklung befindlichen Pflanzen werden vor dem Angriff der bodenbürtigen Mikroorganismen geschützt.

Die erfindungsgemässen Gemische sind gegen phytopathogene Pilze aktiv, welche den folgenden Klassen angehören: Ascomycetes [z.B. die Gattungen Erysiphe, Sclerotinia, Monilinia, Helminthosporium (= Drechslera), Mycosphaerella, Pyrenophora]; Basidiomycetes (z.B. die Gattungen Ustilago, Puccinia, Tilletia, Rhizoctonia); Fungi imperfecti (z.B. die Gattungen Fusarium, Botrytis, Pyricularia, Septoria, Phoma, Alternaria). Die erfindungsgemässen Kombinationen sind insbesondere bei der Saatbehandlung (Frucht, Knollen, Körner) wirksam, die Wirkung gegen Fusarium nivale auf Weizen ist dabei besonders ausgeprägt. Sie eignen sich jedoch ebenfalls für die direkte Behandlung des Bodens oder der Pflanze oder einzelner Pflanzenteile. Sie weisen eine gute Pflanzenverträglichkeit auf und sind ökologisch unbedenklich.

Bei seiner Verwendung wird das erfindungsgemässe Gemisch normalerweise zusammen mit den in der Formulierungstechnik üblichen Hilfsmitteln eingesetzt. Die Aktivkomponenten der Formeln I und II werden z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch zu Enkapsulierung in z.B. polymeren Stoffen in bekannter Weise verarbeitet. Die Anwendungsverfahren wie Versprühen, Vernebeln, Verstäuben, Verstreuen, Bestreichen oder Giessen und die Form des Mittels werden den angestrebten Zielen und den gegebenen Verhältnissen angepasst. Günstige Aufwandmengen liegen im allgemeinen bei je 0,0005 bis höchstens 0,5 kg, insbesondere je 0,001-0,01 kg Aktivsubstanz I und II pro 100 kg zu schützendes Gut. Die Applikationsbedingungen hängen jedoch ganz wesentlich von der Beschaffenheit (Grösse der Oberfläche, Konsistenz, Feuchtigkeitsgehalt) des Gutes und dessen Umgebungseinflüssen ab.

Unter Lager- und Vorratsgütern, die mit dem erfindungsgemässen Gemisch geschützt werden können, und insbesondere unter Vermehrungsgut, im speziellen Saatgut, sollen im Rahmen vorliegender Erfindung pflanzliche und/oder tierische Naturstoffe und deren Weiterverarbeitungsprodukte verstanden werden, die über einen längeren Zeitraum hin lagerfähig gemacht werden sollen, so beispielsweise die nachfolgend genannten und aus dem natürlichen Lebenszyklus herausgenommenen Pflanzen, und deren Pflanzenteile (Stengel, Blätter, Knollen, Samen, Früchte, Körner), die im frisch geernteten Zustand oder in weiterverarbeitbarer Form vorliegen (vorgetrocknet, befeuchtet, gepresst, zerkleinert, gemahlen, geröstet etc.). Hierzu gehört aber auch der Schutz von Nutzholz, sei es in Form von Rohhölzern oder in Form von Fertigteilen (Bauholz, Mobiliar, Leitungsmaste, Abschrankungen und dergleichen). Weiterhin gehören hierzu Naturprodukte tierischer Herkunft, die lagerfähig gemacht werden sollen, z.B. Häute, Felle, Haare und dergleichen.

Als pflanzliche Zielkulturen gelten im Rahmen dieser Erfindung beispielsweise folgende Pflanzenarten: Getreide; (Weizen, Gerste, Roggen, Hafer, Reis, Sorghum, Mais und Verwandte); Rüben (Zucker- und Futterrüben); Hülsenfrüchte: (Bohnen, Linsen, Soja, Erbsen, Kaffee); Oelkulturen: (Raps, Senf, Mohn, Sonnenblumen); Gurkengewächse: (Gurken, Kürbis, Melonen); Fasergewächse: (Baumwolle, Flachs); Gemüsesorten (Kopfsalat, Kohlarten, Spinat, Möhren, Zwiebeln, Tomaten, Kartoffeln, Paprika); Zierpflanzen: (Tulpen, Osterglocken, Dahlien, Chrysanthemen und andere Blumen) sowie Gewürzkräuter und ihre Samen.

Ein bevorzugtes Verfahren zum Aufbringen des erfindungsgemässen Gemisches besteht in einem Besprühen oder Benetzen des abgetrennten Pflanzenmaterials mit einer flüssigen Aufbereitung oder im Vermischen des Pflanzenmaterials mit einer festen Aufbereitung der Aktivsubstanzen. Diese Konservierungs-Verfahren sind ein Teil der vorliegenden Erfindung, desgleichen das mit diesem Gemisch aus I und II behandelte Holz oder Lager- und Vorratsgut bzw. Vermehrungsgut. Der letztgenannte Begriff Vermehrungsgut schliesst generatives Pflanzenmaterial wie Saatgut und vegetatives Pflanzenmaterial wie Stecklinge und Knollen (z.B. Kartoffeln) ein.

Die Wirkstoffe der Formeln I und II werden erfindungsgemäss in Form von Zusammensetzungen verwendet und können zusammen mit gegebenenfalls weiteren in der Formulierungstechnik üblichen Trägerstoffen, Tensiden oder anderen applikationsfördernden Zusätzen eingesetzt werden.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Das Gemisch der Verbindungen der Formeln I und II kann nach einem besonders bevorzugten Verfahren auf Samenkörner, Knollen, Früchte oder sonstiges zu schützendes Pflanzenmaterial (z.B. auch Holz) aufgebracht werden (Coating), indem man das Material entweder mit einer flüssigen Zubereitung der Wirkstoffe tränkt oder mit einer flüssigen

oder festen Zubereitung beschichtet. Darüber hinaus sind in besonderen Fällen weitere Applikationsarten möglich, so z.B. die gezielte Behandlung von Pflanzenabschnitten oder Zweigen, die der Vermehrung dienen.

Die Verbindungen der Formeln I und II werden dabei in unveränderter Form oder vorzugsweise zusammen mit den in der Formulierungstechnik üblichen Hilfsmitteln eingesetzt und werden daher z.B. zu Emulsionskonzentraten und streichfähigen Pasten (z.B. für Holzschutz), direkt versprühbaren oder verdünnbaren Lösungen, verdünnten Emulsionen, Spritzpulvern, löslichen Pulvern, Stäubemitteln, Granulaten, auch zu Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden ebenso wie die Art der Mittel den angestrebten Zielen und den gegebenen Verhältnissen entsprechend gewählt. Günstige Aufwandmengen liegen bei Feld-Behandlung im allgemeinen bei 5 g bis 5 kg Aktivsubstanz (AS) der Formeln I und II je ha; bevorzugt bei 10 g bis 2 kg AS/ha, insbesondere bevorzugt bei 20 g bis 600 g AS/ha.

Die Formulierungen, d.h. die den Wirkstoff der Formeln I und II und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethylenglykolmonomethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle oder Sojaöl; oder Wasser.

Als feste Trägerstoffe, z.B. für Stäubemittel und dispergierbare Pulver, lassen sich Calcit, Talkum, Kaolin, Montmorillonit oder Attapulgit, hochdisperse Kieselsäure oder saugfähige Polymerisate verwenden. Als gekörnte, adsorptive Granulatträger kommen Bimsstein, Ziegelbruch, Sepiolit oder Bentonit, als nicht-sorptive Träger z.B. Calcit oder Dolomit in Frage.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoff der Formel I, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus Verbindung I und Verbindung II in einem bestimmten Mischungs-Verhältnis 10:1 bis 1:11 bedeutet.

| Spritzpulver | a) | b) | c) |
|---|---|---|---|
| Wirkstoff [I:II = 3:2(a), 1:1(b), 1:11(c)] | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether | - | 2 % | - |
| (7-8 Mol Ethylenoxid) | | | |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen. Mit solchen Brühen lassen sich Nass- oder Feuchtbeizen an vermehrungsfähigem Material durchführen, z.B. an Getreidesaatgut oder Pflanzenknollen.

| Emulsions-Konzentrat | |
|---|---|
| Wirkstoff (I:II = 2:5) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden, die sich im Pflanzenschutz, aber auch im Holzschutz einsetzen lassen.

| Stäubemittel | a) | b) | c) |
|---|---|---|---|
| Wirkstoff [I:II = 4:1 (a); 7:1 (b) und 1:1 (c)] | 5 % | 8 % | 4 % |
| Talkum | 95 % | - | - |
| Kaolin | - | 92 % | - |
| Gesteinsmehl | - | - | 96 % |

Man erhält anwendungsfertige Stäubemittel, indem der Wirkstoff mit den Träger vermischt und auf einer geeigneten Mühle vermahlen wird. Solche Pulver lassen sich zur Trockenbeize für Saatgut verwenden.

| Extruder Granulat | |
|---|---|
| Wirkstoff (I:II = 7:8) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:5) | 8% |
| Polyethylenglykol (MG 200) | 3 % |
| Kaolin (MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II = 2:3) | 40 % |
| Propylenglykol | 10 % |
| Nonylphenolpolyethylenglykolether (15 Mol Et-oxid) | 6 % |
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliche oder tierische Produkte durch Besprühen, Begiessen oder Eintauchen behandeln und vor Mikoorganismen-Befall schützen.

Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combination". Weeds 15, Seiten 20-22.2) (LIMPEL and al., 1062 "Weeds control by... certain combinations". Proc. NEWCL, Vol. 16, pp. 48-53):
(g AS/hl = Gramm Aktivsubstanz je Hektoliter Spritzbrühe)
X = % Wirkung durch Fungizid I bei p g AS/ha
Y = % Wirkung durch Fungizid II bei q g AS/ha
E = die erwartete Wirkung der Fungizide I+II bei p+q g AS/ha Aufwandmenge (additive Wirkung),
dann ist nach Colby:

$$E = X + Y - \frac{X \cdot Y}{100}$$

Wenn die tatsächlich beobachtete Wirkung (O) grösser ist als die erwartete, so ist die Kombination in ihrer Wirkung überadditiv, d.h. es liegt ein synergistischer Effekt vor.

Beispiel 1: Fungizide Wirkung gegen den Erreger der Streifenkrankheit (Helminthosporium gramineum) an Wintergerstensaatgut

Mit Helminthosporium gramineum infizierte Wintergerste (Sorte Hauter) wird vom Feld geerntet. Der Malzagar-Test ergibt, dass das Saatgut zu 95 % infiziert ist. Dieses Saatgut wird mit Mischungen der Aktivsubstanzen, wie in der folgenden Tabelle gezeigt, behandelt. Die Aktivkomponenten werden zunächst in Wasser dispergiert und auf das sich auf einer rotierenden Scheibe befindliche Saatgut gespritzt. Diese Arbeitsweise entspricht praxisüblicher Anwendung. Als Vergleich dient nichtgebeiztes Saatgut der gleichen Herkunft.

Je 100 Körner werden 2 cm tief in Saatschalen (45x35x10 cm) in sterile Ackererde gesät. Der Versuch wird in dreifacher Wiederholung angelegt. Die Saatschalen werden befeuchtet und 28 Tage lang bei 2°C unter Ausschluss von Licht gehalten. Sie werden dann in ein Gewäschshaus bei 18°C/12°C (Tag/Nacht) überführt. Die Befallsauswertung (% befallene Pflanzen) erfolgt 56 Tage nach der Aussaat. Zu diesem Zeitpunkt zeigen mit H. gramineum befallene Pflanzen typische, streifenförmige Aufhellungen auf dem ersten Blatt. Der prozentuale Anteil befallener Pflanzen in den Behandlungen wird in Relation zum prozentualen Anteil befallener jedoch unbehandelter Pflanzen gesetzt und als %Pilzbefall ausgedrückt.

Tabelle 1

| Behandlung Nr. | g Aktivsubstanz/100 kg Saatgut | | Pilzbefall (%) | Wirkung E (berechnet) (%) (COLBY) | Wirkung 0 (gefunden) (%) |
|---|---|---|---|---|---|
| | Komponente I | Komponente II | | | |
| 1. Vergleich | - | - | 100 | - | - |
| 2. | 0,43 | - | 68 | - | 32 |
| 3. | 1,7 | - | 43 | - | 57 |
| 4. | 3,4 | - | 38 | - | 62 |
| 5 | - | 0,5 | 85 | - | 15 |
| 6. | - | 1,0 | 79 | - | 21 |
| 7. | - | 2,0 | 58 | - | 42 |
| 8. | 0,43 | 0,5 | 55 | 42 | 45 |
| 9. | 0,43 | 1,0 | 49 | 46 | 51 |
| 10. | 1,7 | 2,0 | 22 | 75 | 78 |
| 11. | 3,4 | 0,5 | 26 | 68 | 74 |
| 12. | 3,4 | 1,0 | 25 | 70 | 75 |
| 13. | 3,4 | 2,0 | 12 | 78 | 88 |

Wie aus der Tabelle 1 ersichtlich ist, weisen die Behandlungen Nr. 8-13, bei welchen die Komponenten I und II in einem breiten Bereich der Mischungsverhältnisse variiert wurden, eine deutlich gesteigerte, d.h. synergistische Wirkung auf.

Aehnlich gesteigerte, d.h. synergistische Wirkung zeigt sich gegen Schneeschimmel (Gerlachia nivalis) auf Weizen, Gerste und Roggen, gegen Ustilago nuda auf Gerste, gegen Tilletia caries auf Weizen sowie gegen andere samen- und bodenbürtige Pathogene.

Beispiel 2: Fungizide Wirkung gegen Gerlachia nivalis. Roggen - Saatgutbehandlung

Zur Anwendung als Trockenbeizmittel werden die Wirkstoffe durch Strecken (= Verdünnen) mit Gesteinsmehl zu einer feinpulvrigen Mischung verarbeitet, die eine gleichmässige Verteilung auf der Saatgutoberfläche gewährleistet.

Zur Beizung schüttelt man das infizierte Saatgut 3 min. lang mit dem Beizmittel in einer verschlossenen Glasflasche.

Den Roggen sät man zu je 100 Korn 1 cm tief in 2 Saatschalen in Standarderde und kultiviert ihn im Gewächshaus bei einer Temperatur von ca. 10°C und einer relativen Luftfeuchtigkeit von ca. 95 %. Die tägliche Bestrahlungsdauer mit künstlichem Licht (Gewächshauslampe) beträgt 15 Stunden.

Ca. 3 Wochen nach der Aussaat erfolgt die Auswertung der Pflanzen auf Symptome des Befalls. Die Aufwandmengen der Einzelwirkstoffe und des Gemisches sowie die Versuchsresultate gehen aus der folgenden Tabelle 2 hervor.

Beispiel 3: Fungizide Wirkung gegen Fusarium culmorum. Weizen-Saatgutbehandlung

Die Anwendung der Wirkstoffe erfolgt als Feucht- bzw. Trockenbeizmittel.

Zur Beizung schüttelt man das infizierte Saatgut 3 min. lang mit dem Beizmittel in einer verschlossenen Glasflasche.

Den Weizen sät man zu je 100 Korn 1 cm tief in 2 Saatschalen in Standarderde und kultiviert ihn im Gewächshaus bei einer Temperatur von ca. 18°C und täglich 15 Stunden künstlichem Licht.

Ca 3. Wochen nach der Aussat erfolgt die Auswertung der Pflanzen auf Symptome des Befalls.

Die Aufwandmengen der Einzelwirkstoffe und des Gemischs sowie die Versuchsresultate gehen aus Tabelle 2 hervor.

Tabelle 2

| Behandlung Nr. | mg Aktivsubstanz/kg Saatgut | | Wirkungsgrad in % der unbehandelten Kontrolle |
|---|---|---|---|
| | Komponente I | Komponente II | |
| Beispiel 2 (Roggen) | 1,5625 | - | 35 % |
| | - | 1,5625 | 0 % |
| | 0,78125 | 0,78125 | 59 % |
| Beispiel 3 (Weizen) | 25 | - | 59 % |
| | - | 25 | 64 % |
| | 12,5 | 12,5 | 69 % |
| Unbehandelte Kontrolle | - | - | 0 % |

## Patentansprüche

1. Mittel enthaltend mindestens zwei Wirkstoff-Komponenten in einer eine synergistische fungizide Wirkung erzeugenden Menge, dadurch gekennzeichnet, dass die eine Komponente I), 4-(2,2-Difluoro-1,3-benzodioxol-7-yl)-1H-pyrrol-3-carbonitril, der Formel I

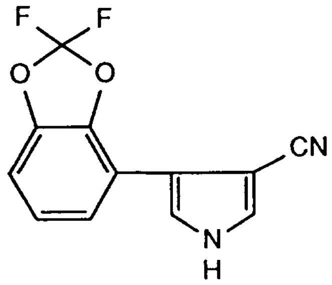

(I)

und die andere Komponente II), α-[2-(4-Chlorophenyl)ethyl]-α-(1,1-dimethyl-ethyl)-β-(1H-1,2,4-triazolyl)-1-ethanol der Formel II

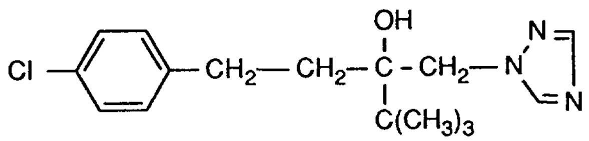

(II)

oder eines ihrer Salze ist, zusammen mit einem geeigneten Trägermaterial.

2. Mittel gemäss Anspruch 1, dadurch gekennzeichnet, dass das Gewichtsverhältnis I:II = 10:1 bis 1:20 beträgt.

3. Mittel gemäss Anspruch 2, dadurch gekennzeichnet, dass das Gewichtsverhältnis I:II = 10:1 bis 1:12 beträgt.

4. Mittel gemäss Anspruch 3, dadurch gekennzeichnet, dass das Gewichtsverhältnis I:II= 4:1 bis 1:2 beträgt.

5. Verfahren zur Bekämpfung oder Verhütung von Pflanzenkrankheiten, dadurch gekennzeichnet, dass man in beliebiger Reihenfolge oder gleichzeitig eine durch Infektion befallene oder gefährdete Stelle der Pflanze mindestens mit einem Wirkstoff der Formel I und einem Wirkstoff der Formel II in einer eine synergistische fungizide Wirkung erzeugenden Menge behandelt.

6. Verfahren gemäss Anspruch 5, dadurch gekennzeichnet, dass pflanzliches Vermehrungsgut behandelt wird.

7. Verfahren gemäss Anspruch 6, wobei als Vermehrungsgut das Saatgut dient.

8. Das nach dem Verfahren gemäss Anspruch 6 behandelte pflanzliche Vermehrungsgut.

9. Verfahren zum Schützen von tierischem oder pflanzlichem Material, insbesondere Lager- und Vorratsgut sowie Nutzholz, vor Pilzbefall, dadurch gekennzeichnet, dass man in beliebiger Reihenfolge oder gleichzeitig das zu schützende Material mindestens mit einem Wirkstoff der Formel I und einem Wirkstoff der Formel II in einer eine synergistische fungizide Wirkung erzeugenden Menge behandelt.

10. Das nach dem Verfahren gemäss Anspruch 9 behandelte tierische oder pflanzliche Material.

**Claims**

1. A composition comprising at least two active components in an amount giving a synergistic fungicidal effect, wherein one component I) is 4-(2,2-difluoro-1,3-benzodioxol-7-yl)-1H-pyrrole-3-carbonitrile of the formula I

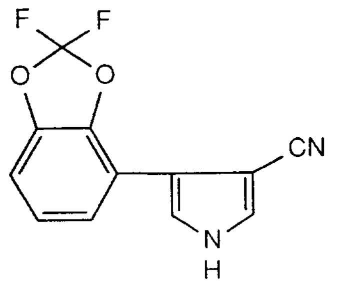

(I)

and the other component II) is α-[2-(4-chlorophenyl)ethyl]-α-(1,1-dimethyl-ethyl)-β-(1H-1,2,4-triazolyl)-1-ethanol of the formula II

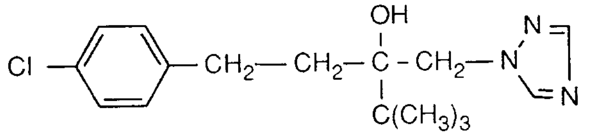

(II)

or one of its salts, together with a suitable carrier material.

2. A composition as claimed in claim 1, in which the weight ratio is I:II = 10:1 to 1:20.

3. A composition as claimed in claim 2, in which the weight ratio is I:II = 10:1 to 1:12.

4. A composition as claimed in claim 3, in which the weight ratio is I:II = 4:1 to 1:2.

5. A process for controlling or preventing plant diseases, which comprises treating a locus which is already infected or is liable to be infected, in any order or simultaneously, with at least one active ingredient of the formula I and one active ingredient of the formula II in an amount giving a synergistic fungicidal effect.

6. A method as claimed in claim 5 for treating plant propagation material.

7. A process as claimed in claim 6, wherein the propagation material is the seed.

8. A plant propagation material which has been treated by a process as claimed in claim 6.

9. A process for protecting material of animal or vegetable origin, in particular storage goods as well as timber, against attack by fungi, which comprises treating the material to be protected, in any order or simultaneously, with at least one active ingredient of the formula I and one active ingredient of the formula II in an amount giving a synergistic fungicidal effect.

**10.** The material of animal or vegetable origin which has been treated by a process as claimed in claim 9.

## Revendications

**1.** Moyen contenant au moins deux composants de principe actif en une quantité provoquant un effet fongicide synergique, caractérisé en ce que le composant I) est le 4-(2,2-difluoro-1,3-benzodioxol-7-yl)-1H-pyrrol-3-carbonitrile, de formule I

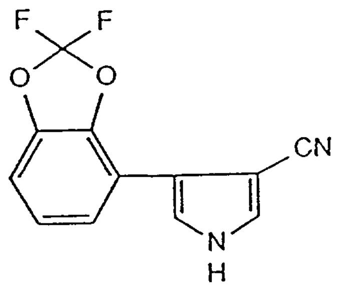

(I)

et l'autre composant II), est le α-[2-(4-chlorophényl)éthyl]-α-(1,1-diméthyléthyl)-β-(1H-1,2,4-triazolyl)-1-éthanol de formule II

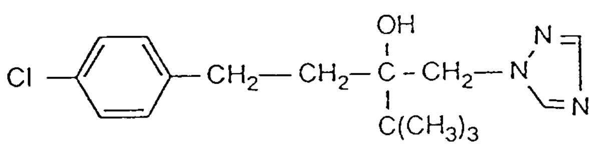

(II)

ou un de ses sels, en présence d'un matériau véhicule approprié.

**2.** Moyen selon la revendication 1, caractérisé en ce que le rapport pondéral I:II est 10:1 à 1:20.

**3.** Moyen selon la revendication 2, caractérisé en ce que le rapport pondéral I:II est 10:1 à 1:12.

**4.** Moyen selon la revendication 3, caractérisé en ce que le rapport pondéral I:II est 4:1 à 1:2.

**5.** Procédé de lutte ou de protection des maladies des plantes, caractérisé en ce qu'on traite dans un ordre quelconque ou simultanément l'endroit où poussent les plantes infecté ou menacé au moins avec un principe actif de formule I et un principe actif de formule II en une quantité produisant un effet fongicide synergique.

**6.** Procédé selon la revendication 5, caractérisé en ce qu'on traite le produit de reproduction végétal.

**7.** Procédé selon la revendication 6, où la semence sert de produit de reproduction.

**8.** Produit de reproduction végétale traité selon le procédé selon la revendication 6.

**9.** Procédé de protection de matériau végétal ou animal, notamment produit de stockage ou de réserve ainsi que bois utile, de l'attaque des champignons, caractérisé en ce qu'on traite dans n'importe quel ordre ou simultanément le matériau à protéger au moins avec un principe actif de formule I et un principe actif de formule II en une quantité produisant un effet fongicide synergique.

**10.** Matériau animal ou végétal traité selon le procédé selon la revendication 9.